# EUROPÄISCHE PATENTANMELDUNG

(11) **EP 0 532 984 A1**
(43) Veröffentlichungstag der Anmeldung: **24.03.1993**
(21) Anmeldenummer: 92115027.2
(22) Anmeldetag: 03.09.1992
(51) Int. Cl.: B28B 1/14, F28F 21/04, C04B 35/56

(54) **Keramikwärmetauscher**

(30) Priorität: 20.09.1991 DE 4131336
(71) Anmelder: SCHUNK INGENIEURKERAMIK GmbH, D-47877 Willich (DE); HEIMSOTH VERWALTUNGEN GmbH & CO. KG, D-31134 Hildesheim (DE)
(72) Erfinder: Berroth, Karl, Dr., W-4000 Düsseldorf 11 (DE); Binder, Olaf, Dipl-Ing. (FH), W-4156 Willich 1 (DE); Bittner, Hans Georg, Dr. Ing., W-3207 Harsum (DE); Weber, Hartmut, Dipl.-Ing., W-3200 Hildesheim (DE)
(74) Vertreter: Sparing Röhl Henseler Patentanwälte

(57) **Zusammenfassung**

Die Erfindung betrifft einen Wärmetauscher, der rotationssymmetrisch und axial durchströmbar ausgebildet und mit radialen, dünnwandigen, durch schmale Zwischenräume voneinander getrennten, von einer ringförmigen mittleren Trennwand (1) aus einwärts und auswärts gerichteten Rippen (2, 3) versehen ist. Für extreme Belastungen besteht der Wärmetauscher aus Siliciumcarbidkeramik, die aus einer relativ dünnflüssigen Dispersion aus pulverförmigem Siliciumkarbid und feinteiligem Kohlenstoff in einem aushärtbaren organischen Bindemittel hergestellt ist, die in eine entsprechende Form gegossen, ausgehärtet, entformt, unter Inertgasatmosphäre geglüht und mit metallischem Silicium infiltriert worden ist.

## Beschreibung

Die Erfindung betrifft einen Wärmetauscher, der rotationssymmetrisch und von zwei Medien axial durchströmbar ausgebildet und mit radialen, dünnwandigen, durch schmale Zwischenräume voneinander getrennten, von einer ringförmigen mittleren Trennwand aus einwärts und auswärts gerichteten Rippen versehen ist.

Derartige Wärmetauscher, die aus Metall gefertigt sind, sind bekannt. Für Anwendungszwecke, bei denen sehr hohe Gastemperaturen erreicht werden, wie etwa zur Ummantelung von Brennerlanzen zum Vorwärmen von Frischluft durch Ofenluft, wobei erstere beispielsweise auf ca. 1000 °C oder mehr von letzterer erwärmt wird, die 1400 °C oder mehr erreichen kann, sind derartige metallische Wärmetauscher jedoch wegen mangelnder Korrosionsfestigkeit, Oxidations- und Erosionsbeständigkeit ungeeignet.

Zur Herstellung von Keramikkörpern aus Siliciumcarbid ist es an sich bekannt, einen wässrigen Schlicker aus feinteiligem Siliciumcarbid und Kohlenstoff herzustellen, der dann in Formen eingebracht wird, die wasserabsaugend wirken, um so dem Schlicker in der Form das Wasser zu entziehen. Ein derartiger Schlicker erlaubt nicht die Herstellung komplizierterer Körper wie Wärmetauscher der eingangs genannten Art, sondern bereits aufgrund der zu verwendenden Formen und auch aufgrund dessen, daß ein Schlicker in enge Bereiche kaum eindringen und dann die Form nicht ausfüllen kann, nur die Realisierung relativ einfacher Geometrien. Nach dem Entformen des trockenen Grünkörpers kann dieser zwar mechanisch bearbeitet werden, jedoch erfordert dies zusätzlichen Arbeits- und Materialaufwand.

Ferner ist es an sich bekannt, eine wässrige Suspension aus feinteiligem Siliciumcarbid und Kohlenstoff sowie einem organischen Binder herzustellen, die dann sprühgetrocknet wird. Das auf diese Weise erhaltene Granulat wird kalt isostatisch zu Grünkörpern gepreßt, die anschließend unter Inertgas geglüht werden, um das Bindemittel zu cracken. Auch hierbei lassen sich nur relativ einfache Geometrien verwirklichen, für komplexe Strukturen ist dieses Verfahren nicht geeignet. Zwar kann man auch hier eine spanende Bearbeitung nach dem Pressen anschließen, jedoch ist auch dies mit entsprechendem Arbeits- und Materialaufwand verbunden.

Auch ist es bekannt, eine Masse, die aus feinteiligem Siliciumcarbid und Kohlenstoff sowie aus Wasser und einem organischen Plastifizierungs- und Bindemittel durch Kneten hergestellt wird, auf einer Strangpresse zu extrudieren, wobei dann das Extrudat entsprechend zerteilt, getrocknet und weiterbehandelt wird. Abgesehen davon, daß der apparative Aufwand beträchtlich ist, ist die extrudierte Masse zunächst nicht fest, so daß eine aufwendige und komplizierte Handhabung notwendig ist, um Deformationen selbst bei weniger komplizierten Querschnittsgeometrien zu vermeiden.

Zusätzlich ist es bekannt, mit einer thermo- oder duroplastischen Verbindung plastifizierte keramische Masse durch Spritzgießen zu verarbeiten. Dies erfordert aber einen hohen appparativen Aufwand mit komplizierten Handhabung der Grünkörper und mit teuren Formen, der sich erst bei einer sehr großen Stückzahl lohnt.

Schließlich ist es bekannt, Dispersionen aus Siliciumcarbid und Kohlenstoff sowie einem organischen Lösungsmittel herzustellen, wobei die Dispersion auf ein Stahlband oder eine Glasplatte in einer Dicke von etwa 0,2 bis 3 mm gegossen wird. Nach Verdampfen des Lösungsmittels erhält man eine Folie mit einer Restflexibilität, aus der Teile gestanzt werden, die anschließend aufeinander laminiert und einer entsprechenden Nachbehandlung unterworfen werden. Auch dieses Verfahren ist somit sehr aufwendig und beinhaltet außerdem Probleme in Bezug auf Toleranzeinhaltung, da beim Laminieren Druck anzuwenden.

Aus der DE-AS 28 37 900 ist ein Verfahren zur Herstellung von Formkörpern aus Siliciumkarbid bekannt, bei dem von einem wässrigen Schlicker ausgegangen wird, der in Gipsformen gegossen wird. Gipsformen sind poröse, wassersaugende Formen, die aufgrund des dadurch bewirkten Wasserentzugs zwangsläufig zu einem entsprechenden Schwinden des Grünkörpers führen. Beispielsweise schwindet der Grünkörper bei Verwendung von Kernen auf den steifen Kern, was zu Rissen führen kann. Außerdem muß die Gipsform zum Entformen zerstört werden und ist nicht wiederverwendbar. Der Zusatz eines aushärtbaren Kunstharzes zur Festigkeitserhöhung des Grünkörpers, der in einer Menge von etwa 1 bis 10 Gew.% erfolgt, ändert ebensowenig wie eine eventuelle Verlangsamung der Wasseraufnahme durch die Gipsform durch deren Beschichtung mit Wachs etwas daran, daß der Schlicker ein wässriger ist, der das Schwindungsproblem beinhaltet und die Zerstörung der Gipsformen zum Entformen benötigt. Abgesehen davon kommt es nicht auf die Konsistenz des Kunstharzes an, es kann sowohl in flüssiger wie in fester Form zugesetzt werden. Anstelle des Kunstharzzusatzes kann hierbei die Grünfestigkeit auch dadurch erhöht werden, daß ein "Brennen" des Grünkörpers in sauerstoffhaltiger Atmosphäre zum Umwandeln des SiC in SiO₂, das als Bindephase zur Erhöhung der Grünfestigkeit dient, vorgenommen wird, wobei noch etwas restlicher Kohlenstoff aus der Zersetzung des Kunststoffs im Grünkörper erhalten wird. Schließlich wird eine weitere organische Verbindung wie Furfurylalkohol eingebracht und verkokt, um sie in einem weiteren Hochtemperaturprozeß in Kohlenstoff zu überführen, damit in den Poren des Formkörpers Kohlenstoff in gewünschter Menge vorhanden ist.

Aufgabe der Erfindung ist es, einen Wärmetauscher der eingangs genannten Art zu schaffen, der auch bei sehr hohen Temperaturen genügend korrosionsfest, oxidationsbeständig, temperaturwechselbeständig, erosionsbeständig und sehr gut wärmeleitfähig sowie einfach in der Herstellung ist.

Diese Aufgabe wird dadurch gelöst, daß der Wärmetauscher aus Siliciumcarbidkeramik besteht, die aus einer relativ dünnflüssigen Dispersion aus pulverförmigem Siliciumcarbid und feinteiligem Kohlenstoff in einem aushärtbaren, organischen Bindemittel, insbesondere Kunstharz, hergestellt ist, die in eine entsprechende nichtsaugende Form gegossen, ausgehärtet, entformt, unter Inergasatmosphäre geglüht und mit metallischem Silicium infiltriert worden ist.

Weitere Ausgestaltungen der Erfindung sind der nachfolgenden Beschreibung und den Unteransprüchen zu entnehmen.

Hierbei wird eine Dispersion der keramischen Rohstoffe in einer flüssigen, aushärtbaren, organischen Verbindung verwendet, die ohne Flüssigkeitsentzug aushärtet, wobei gegebenenfalls zur Viskositätserniedrigung zugesetztes streckendes Wasser im sich vernetzenden Harz zunächst resorbiert wird und erst bei der späteren Wärmebehandlung, dem Glühen des Grünkörpers unter Inertgasatmosphäre, verdampft oder verdunstet. Dementsprechend werden daher nichtsaugende Formen eingesetzt und es bleibt auch der gesamte Inhalt der Form erhalten, ein Schwinden tritt nicht ein. Ferner lassen sich hierdurch sehr dünne Wandungen oder Stege problemlos herstellen. Die Formen sind auch, soweit es sich nicht um verlorene Kerne handelt, grundsätzlich wiederverwendbar. Die Formen können insbesondere aus weichem Material wie Gummi oder Silikonkautschuk sein, so daß sich keine Spannungen beim Erwärmen der in der Form befindlichen Dispersion aufgrund unterschiedlicher Wärmeausdehnungekoeffizienten ergeben. Ein Schwinden findet erst nach der Entformung während des Glühens statt. Auch findet keine Rekristallisation statt, sondern nur ein Cracken der organischen Verbindung in flüchtige Bestandteile und gegebenenfalls verbleibende Bestandteile wie Kohlenstoff. Hierdurch wird Kohlenstoff in den Poren des Formkörpers in gewünschter Menge zur Reaktion mit anschließend infiltriertem Silicium sofort erhalten.

Infolge der relativ dünnflüssigen Dispersion (etwa sirupartig bis tranig) ist es möglich, komplizierte Formen auch mit sehr dünnwandigen Abschnitten für den herzustellenden Formkörper insbesondere drucklos (oder unter geringem Druck bis etwa 5 bar) vollständig zu füllen, so daß ein Wärmetauscher mit einer Geometrie der beschriebenen Art hierdurch ohne weiteres realisierbar ist. Da die Dispersion in der Form aushärtet, ist die Handhabung des Grünkörpers unproblematisch und gegebenenfalls kann noch eine mechanische Nachbearbeitung vorgenommen werden, etwa Bohrungen od.dgl. angebracht werden.

Die hierbei verwendeten Formen können aus Metall, Gummi, Wachs oder Kunststoff sein, es können auch etwa auf Gießereiformmaschinen hergestellte und beschichtete Sandformen verwendet werden. Formen aus Siliconharz oder Polytetrafluorethylen bzw. anderen polyhalogenierten Kohlenwasserstoffen werden normalerweise bevorzugt, weil bei diesen kein Formtrennmittel notwendig ist. Sie werden nach dem Aushärten des Gießlings mechanisch, chemisch oder thermisch entfernt.

Die zu dispergierenden Siliciumcarbidteilchen haben zweckmäßigerweise eine Korngröße von etwa 0,5 bis 500 µm, insbesondere 10 bis 150 µm. Über die Körnungen der Ausgangsmaterialen lassen sich die Materialeigenschaften der herzustellenden Keramikteile in bezug auf Wärmeleitfähigkeit und mechanische Festigkeit etwas beeinflussen.

Pulverförmiges Siliciumcarbid und Kohlenstoff werden in einem Kunstharz dispergiert. Hier kommen insbesondere dünnflüssige Furanharze, Epoxidharze, Formaldehydharze, Phenolharze oder Siliconharze infrage. Zweckmäßigerweise werden zur Herstellung der Dispersion
5 bis 40 Gew.-%, insbesondere 10 bis 25 Gew.-% Kunstharz,
0 bis 15 Gew.-%, insbesondere 3 bis 10 Gew.-% Wasser,
0 bis 20 Gew.-%, insbesondere 1 bis 10 Gew.-% Kohlenstoff,
50 bis 95 Gew.-%, insbesondere 60 bis 75 Gew.-% SiC
verwendet. Das gegebenenfalls vorhandene Wasser dient zum Strecken des Kunstharzes und wird beim Glühen des Grünkörpers ausgedampft. Das Verhältnis von SiC zu C beträgt zweckmäßigerweise 80:20 bis 95:5, insbesondere etwa 90:10. Als Kohlenstoff kommt beispielsweise Ruß, Koks oder Graphit infrage, wobei Korngrößen von 0,02 bis 500 µm, insbesondere 0,03 bis 5 µm, vorteilhaft sind.

Das Aushärten des in der Form befindlichen Grünkörpers kann durch Wärmeeinwirkung beschleunigt werden. Wenn ungestrecktes Kunstharz zur Anwendung kommt, kann gegebenenfalls bis zu etwa 150°C erwärmt werden, wenn das Kunstharz mit Wasser gestreckt ist, ist nur eine Erwärmung auf ca. 50 bis 70°C zweckmäßig.

Beim Glühen wird das Kunstharz gecrackt, so daß sich ein offenporiger Körper ergibt, wobei die flüchtigen Bestandteile entfernt werden, so daß noch ein entsprechender Kohlenstoffanteil in den Porenbereichen verbleibt. Diese Porenstruktur erlaubt es, ohne weiteres metallisches Silicium als Schmelze und/oder im Dampfform zu infiltrieren, das wenigstens teilweise mit dem freien Kohlenstoff zu weiterem SiC reagiert. Zweckmäßigerweise wird derart metallisches Silicium infiltriert, daß 3 bis 30 Gew.-5, insbesondere 8 bis 15 Gew.-%, freies metallisches Silicium Rest SiC bleibt. Die Porenstruktur geht durch das Infiltrieren des Siliciums verloren, im fertigen Zustand besitzt der Wärmetauscher keine Porosität mehr - der Werkstoff ist dicht, die Oberfläche geschlossen - und ist korrosionsfest, oxidationsbeständig, temperaturwechselbeständig, erosionsbeständig und besitzt eine sehr gute Wärmeleitfähigkeit.

Anstelle eines Kunstharzes können auch andere aushärtbare organische Bindemittel verwendet werden, etwa Duromere, Doroplaste etc.

Der Wärmetauscher eignet sich insbesondere zur Anwendung bei einem Brenner eines Hochtemperaturbrennofens in der Keramik- und Porzellanindustrie.

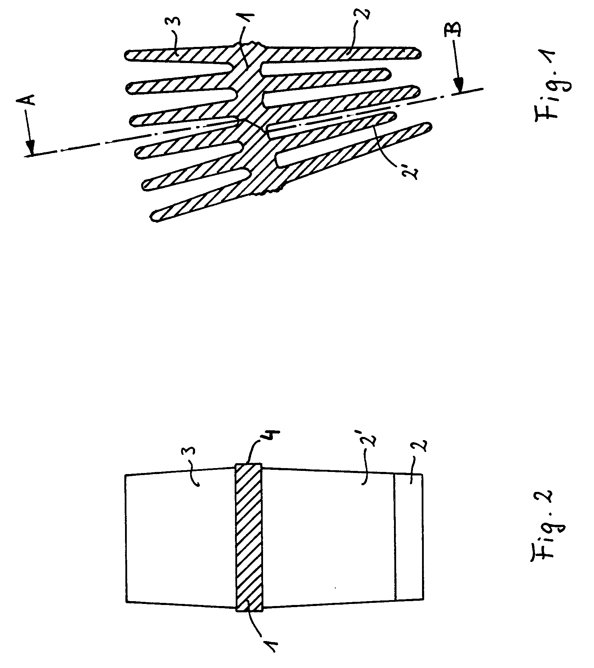

In den beigefügten Abbildungen ist in Fig. 1 ausschnittweise im Radialschnitt ein rotationssymmetrischer, mit radialen, dünnwandigen, von einer ringförmigen mittleren Trennwand 1 aus einwärts bzw. auswärts gerichteten Rippen 2, 2' bzw. 3 versehener Wärmetauscher dargestellt (Fig. 2 zeigt einen Schnitt längs der Linie A-B von Fig. 1). Die Rippen 2 sind etwas länger als die sich damit abwechselnden Rippen 2', um eine genügende Vielzahl von einwärts gerichteten Rippen 2, 2' unterbringen zu können. Ein derartiger, außen durch ein Hüllrohr und innen durch einßegrenzerrohr (nicht dargestellt) zu begrenzender, in axialer Richtung insbesondere im Gegenstrom durchströmbarer Wärmetauscher kann etwa 2,5 mm dicke Rippen 2, 2', 3 mit entsprechend schmalen Zwischenräumen zwischen den Rippen 2, 2', 3 aufweisen, so daß sich bei der dargestellten Struktur beispielsweise Oberflächen von etwa 3 m²/m Länge bei ca. 250 mm Außendurchmesser und 100 mm Innendurchmesser erzielen lassen.

An den beiden axialen Stirnseiten ist die mittlere Trennwand 1 durch einen axial etwas vorstehenden Ringabschnitt 4 verlängert, so daß zwischen den Rippen 2, 2', 3 von zwei axial benachbarten Wärmetauscherelementen ein Abstand besteht, wo sich Turbulenzen ausbilden können. Auch lassen sich hierdurch die Rippen 2, 2', 3 versetzt zueinander anordnen, um Vermischungen des durchströmenden Gases zu erreichen.

## Patentansprüche

1. Wärmetauscher, der rotationssymmetrisch und von zwei Medien axial durchströmbar ausgebildet und mit radialen, dünnwandigen, durch schmale Zwischenräume voneinander getrennten, von einer ringförmigen mittleren Trennwand (1) aus einwärts und auswärts gerichteten Rippen (2, 3) versehen ist, dadurch **gekennzeichnet,** daß der Wärmetauscher aus Siliciumcarbidkeramik besteht, die aus einer relativ dünnflüssigen Dispersion aus pulverförmigem Siliciumcarbid und feinteiligem Kohlenstoff in einem aushärtbaren, organischen Bindemittel, insbesondere Kunstharz, hergestellt ist, die in eine entsprechende nichtsaugende Form gegossen, ausgehärtet, entformt, unter Inergasatmosphäre geglüht und mit metallischem Silicium infiltriert worden ist.

2. Wärmetauscher Anspruch 1, dadurch gekennzeichnet, daß die Dispersion etwa 5 bis 40 Gew.-%, insbesondere 10 bis 25 Gew.-%, Bindemittel, gegebenenfalls mit bis zu etwa 15 Gew.-%, insbesondere etwa 3 bis 10 Gew.-% Wasser gestreckt, und Rest SiC und C enthält.

3. Wärmetauscher nach Anspruch 1 oder 2, dadurch gekennzeichnet, daß das Verhältnis von SiC zu C etwa 80:20 bis 95:5, insbesondere etwa 90:10, ist.

4. Wärmetauscher nach einem der Ansprüche 1 bis 3, dadurch gekennzeichnet, daß die zu dispergierenden Keramikmaterialteilchen eine Korngröße von etwa 0,5 bis 500 µm, insbesondere 10 bis 150 µm, besitzen.

5. Wärmetauscher nach einem der Ansprüche 1 bis 4, dadurch gekennzeichnet, daß die zu dispergierenden Kohlenstoffteilchen eine Korngröße von 0,02 bis 500 µm, insbesondere 0,03 bis 5µm, besitzen.

6. Wärmetauscher nach einem der Ansprüche 1 bis 5, dadurch gekennzeichnet, daß das infiltrierte metallisches Si einen Anteil an freiem Si von 3 bis 30 Gew.-%, insbesondere 8 bis 15 Gew.-%, aufweist.

7. Wärmetauscher nach einem der Ansprüche 1 bis 6, dadurch gekennzeichnet, daß er unter Verwendung einer aus weichem Material, insbesondere aus Gummi oder Silikonkautschuk, bestehenden Form hergestellt ist.
